# FASCICULE DE BREVET EUROPEEN

(11) **EP 0 511 048 B1**
(45) Date de publication et mention de la délivrance du brevet: **21.12.1994**
(21) Numéro de dépôt: 92401028.3
(22) Date de dépôt: 13.04.1992
(51) Int. Cl.: B65G 47/256, B29C 49/42

(54) **Dispositif de convoyage de préformes agencé pour éliminer des préformes emboîtées les unes dans les autres**
Fördereinrichtung für Vorformlinge, eingerichtet zum Entfernen ineinandersteckender Vorformlinge
Transporting device for preforms adapted for removing nested preforms

(30) Priorité: 16.04.1991 FR 9104647
(43) Date de publication de la demande: 28.10.1992
(73) Titulaire: SIDEL, F- 76053 Le Havre Cedex (FR)
(72) Inventeur: Doudement, Gérard, F-76600 Le Havre (FR); Dulong, Alain, F-76111 Yport (FR)
(74) Mandataire: Gorree, Jean-Michel

(56) Documents cités:
- EP-A- 0 377 353
- GB-A- 867 672
- US-A- 4 244 459

## Description

La présente invention concerne d'une façon générale le domaine de la fabrication de récipients creux en matière synthétique, tels que bouteilles, flacons, etc., par soufflage ou étirage-soufflage de préformes et, plus particulièrement, elle concerne l'alimentation en préformes d'une installation de fabrication de tels récipients.

Pour la fabrication de certains types de récipients, on peut avoir recours à des préformes possédant une tête de plus grande dimension transversale que le corps. Ces préformes étant initialement chargées en vrac dans une trémie, il est possible que plusieurs, par exemple deux, d'entre elles s'emboîtent l'une dans l'autre et que, en raison d'un phénomène de coincement, les moyens d'alimentation et de positionnement des préformes une à une sur des glissières d'amenée à la machine de fabrication des récipients ne soient pas en mesure de les séparer. Les préformes emboîtées se présentent alors sur les glissières de convoyage soit en position verticale, la préforme inférieure reposant par sa tête sur les glissières de la même manière que les préformes isolées et étant surmontées de l'autre ou des autres préformes emboîtées, soit en position horizontale, les préformes emboîtées étant couchées sur les glissières.

Dans tous les cas, les préformes emboîtées ne peuvent pas être introduites dans la machine de fabrication : dans le cas de préformes emboîtées disposées verticalement, celles-ci ne peuvent atteindre les organes de transfert car elles dépassent du gabarit de circulation ; quant aux préformes emboîtées présentées horizontalement, elles ne peuvent pas être saisies par les moyens de transfert. Il en résulte un arrêt de la machine, générateur de rebuts, d'où une diminution du rendement de production.

Il est donc nécessaire de faire en sorte que toutes les préformes qui parviennent à la machine de fabrication puissent être utilisées par celle-ci, et donc d'éliminer les préformes emboîtées avant qu'elles n'atteignent l'entrée de la machine.

L'invention a donc essentiellement pour but d'aménager tout ou partie des moyens de convoyage des préformes conduisant celles-ci à l'entrée de la machine de fabrication, de manière telle que d'éventuelles préformes emboîtées soient éliminées avant leur entrée dans la machine de fabrication. Il est souhaitable que cette élimination soit systématique et sûre, de manière à accroître la fiabilité de fonctionnement de la machine de fabrication des récipients. Il est également souhaitable que les moyens mis en oeuvre à cet effet soient simples, peu coûteux, peu encombrants, qu'ils n'obligent pas à modifier de façon profonde les schémas pour des installations futures et que, si possible, ils puissent être aisément incorporés dans des installations déjà existantes.

A ces fins, l'invention propose un dispositif de convoyage de préformes destinées à la fabrication de corps creux en matière synthétique, tels que bouteilles ou analogues, comportant une voie de cheminement comprenant deux glissières sensiblement parallèles et disposées de manière telle qu'une perpendiculaire commune aux deux glissières soit sensiblement horizontale, lesdites préformes présentant une tête élargie par rapport à leur corps et étant engagées verticalement entre les deux glissières sur lesquelles elles se déplacent en étant soutenues par leur tête. Ce dispositif de convoyage agencé conformément à l'invention se caractérise essentiellement en ce qu'il comporte des moyens d'élimination de préformes emboîtées les unes dans les autres. Ces moyens d'élimination comprennent des moyens de déséquilibrage aptes à déporter le centre de gravité des préformes de manière telle qu'une verticale passant par le centre de gravité d'un ensemble de préformes emboîtées passe à l'extérieur de l'une des glissières et que cet ensemble de préformes emboîtées soit déséquilibré et tombe des glissières.

Afin de conserver la conception d'ensemble de la structure à glissières qui est largement employée dans ce type d'installation, on peut prévoir que les moyens de déséquilibrage des moyens d'élimination des préformes emboîtées comprennent un tronçon de voie de cheminement dans laquelle des deux glissières sont mutuellement décalées de telle manière que leur perpendiculaire commune soit inclinée sur l'horizontale d'une valeur telle que les ensembles de préformes emboîtées soient déséquilibrés.

Dans un mode de réalisation simple, l'une des glissières est parallèle à l'axe de la voie de cheminement tandis que l'autre glissière présente un tronçon qui est situé à une hauteur supérieure à celle du tronçon en regard de la première glissière et qui se raccorde de façon progressive aux tronçons situés à son amont et à son aval.

Pour que l'agencement conforme à l'invention soit en mesure d'agir sur les préformes emboîtées disposées aussi bien en position couchée que verticalement sur les glissières, il est souhaitable que les moyens de déséquilibrage soient agencés pour que la perpendiculaire commune aux deux glissières soit inclinée d'au moins environ 60° par rapport à l'horizontale.

Bien que les moyens de déséquilibrage dont il est question ci-dessus soient en mesure d'éliminer les préformes emboîtées disposées sur les glissières en position couchée ou en position verticale, il s'avère dans la pratique que, si leur efficacité est totale pour l'élimination des préformes emboîtées en position couchée, leur efficacité n'est cependant pas totale en ce qui concerne les préformes emboîtées reposant verticalement sur les glissières. En effet, des essais ont montré que l'efficacité des moyens de déséquilibrage était totale lorsqu'un ensemble de préformes emboîtées en position verticale se déplace isolément sur les glissières. Toutefois ce cas se présente en pratique peu fréquemment, car les préformes se suivent au contact les unes des autres, avec possibilité que se chevauchent les collerettes par lesquelles elles reposent sur les glissières ; le frottement des préformes accolées et le chevauchement des collerettes peuvent s'opposer au basculement d'un ensemble de préformes emboîtées soumis à l'action des moyens de déséquilibrage de l'invention.

Il est donc apparu utile de compléter les susdits moyens de déséquilibrage en prévoyant des moyens d'extraction situés longitudinalement à l'écart des susdits moyens de déséquilibrage et au-dessus de la voie de cheminement, à une hauteur supérieure à celle des préformes isolées circulant sur les glissières, mais inférieure à celle de deux préformes emboîtées circulant en position verticale sur les glissières, lesdits moyens d'extraction étant agencés pour saisir et extraire verticalement hors de la voie de cheminement des préformes emboîtées.

Avantageusement, dans un mode de réalisation préféré, lesdits moyens d'extraction comprennent deux roues contrarotatives munies de palettes élastiquement déformables et mutuellement disposées de manière qu'un ensemble de préformes emboîtées disposées verticalement soit saisi entre les palettes des deux roues contrarotatives et évacué vers le haut.

Dans ce contexte, les moyens d'extraction peuvent être disposés soit en amont, soit en aval des moyens de déséquilibrage.

Il s'est toutefois avéré que la fiabilité des moyens de déséquilibrage et des moyens d'extraction mis en oeuvre conjointement pouvait encore ne pas être totale : en effet, lorsque les moyens d'extraction sont situés en premier lieu (en amont) dans le sens de défilement des préformes, des préformes emboîtées en position couchée sur les glissières ne peuvent pas être saisies par les moyens d'extraction situés plus haut au-dessus d'elles ; poursuivant leur cheminement sur les glissières, ces préformes emboîtées en position couchée peuvent basculer en position verticale, sous l'influence de chocs ou de vibrations par exemple, et se présenter ainsi dans les moyens de déséquilibrage, lesquels pour les raisons indiquées précédemment peuvent ne pas parvenir à évacuer les préformes emboîtées qui se présentent ainsi à l'entrée de la machine de fabrication.

Pour remédier à cet inconvénient et obtenir une fiabilité totale dans l'élimination des préformes emboîtées, il est donc préférable que les moyens d'extraction soient situés en aval des moyens de déséquilibrage, dans le sens de défilement des préformes.

D'après les explications qui précèdent, on conçoit aisément que les moyens mis en oeuvre conformément à l'invention sont technologiquement simples. De ce fait, non seulement le coût d'une telle installation reste modique, mais en outre elle ne nécessite pas une modification profonde des schémas d'implantation et peut donc être montée dans des installations neuves aussi bien qu'introduite dans des installations déjà existantes.

L'invention sera mieux comprise à la lecture de la description qui suit de certains modes de réalisation préférés donnés uniquement à titre d'exemple non limitatif. Dans cette description on se réfère aux dessins annexés sur lesquels :
- la figure 1 représente schématiquement un exemple de préforme susceptible d'être concernée par l'invention ;
- la figure 2 est une vue schématique de côté montrant des préformes selon la fig. 1 mutuellement emboîtées, disposées sur des glissières de convoyage dans deux positions différentes ;
- la figure 3 est une vue schématique d'ensemble montrant un dispositif conforme à l'invention dans son implantation au sein d'une installation ;
- les figures 4 et 5 sont des vues respectivement en bout et de dessus, montrant les moyens de déséquilibrage du dispositif de la fig. 3 avec des préformes empilées en position verticale en cours d'éjection ;
- la figure 6 est une vue de dessus des mêmes moyens avec des préformes empilées en position couchée en cours d'éjection ; et
- la figure 7 est une vue schématique de face des moyens d'extraction de la figure 3, avec des préformes empilées en position verticale en cours d'extraction.

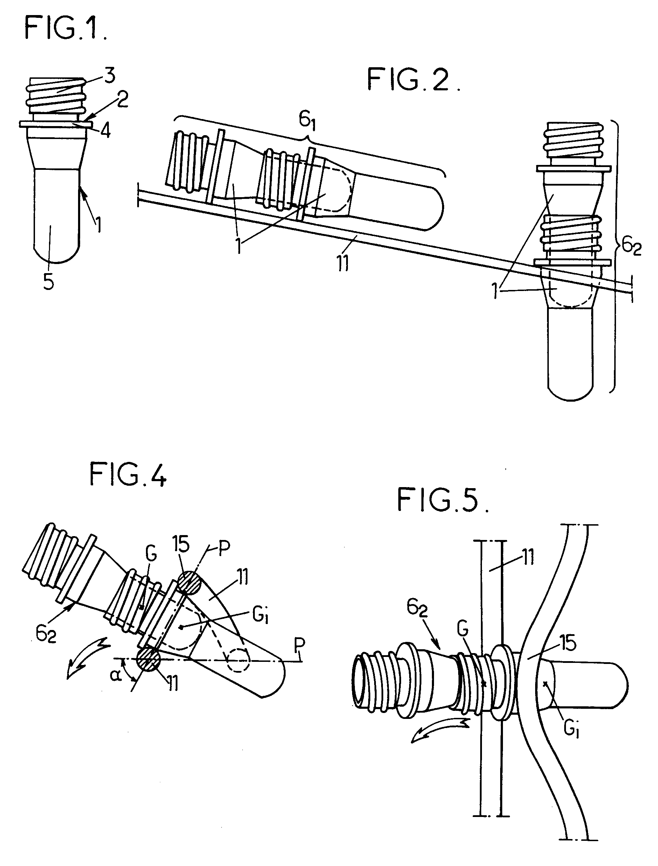

La figure 1 montre un exemple, parmi d'autres possibles, de préforme concernée par l'invention. Cette préforme 1 présente une tête 2 constituée par un col 3 préformé à la forme et aux dimensions définitives du col du récipient final (bouteille, flacon, etc.) et par une collerette 4 de grand diamètre servant d'appui pour les opérations de manutention en cours de fabrication. Sous cette tête 2 s'étend un corps 5 à paroi épaisse qui présente, au moins dans sa partie opposée au col, une dimension transversale (notamment un diamètre) inférieure à celle de la tête 2 ; le corps 5 peut, comme représenté à la fig. 1, se raccorder à la tête par une section tronconique.

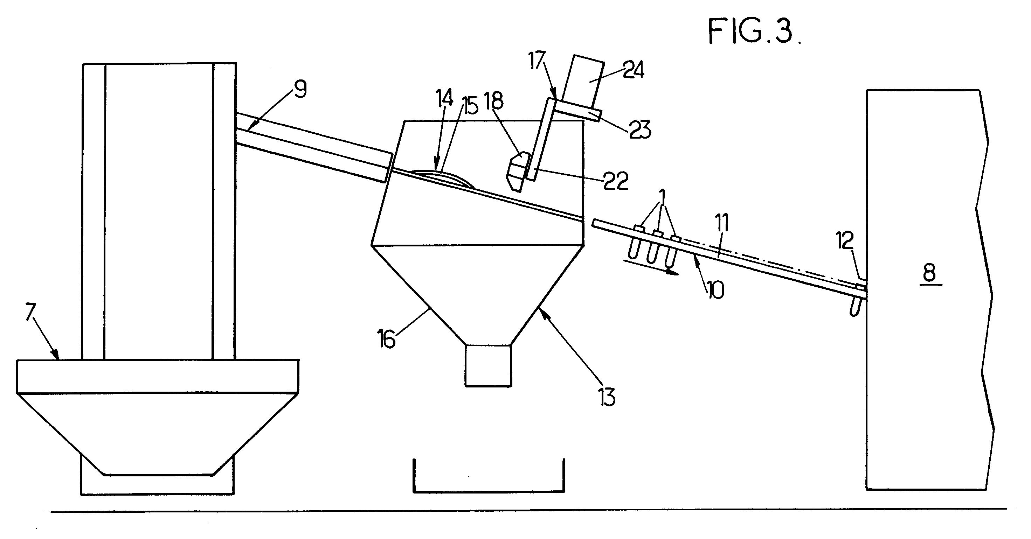

De telles préformes à corps plus étroit que la tête peuvent accidentellement s'emboîter les unes dans les autres et se coincer dans cette position, comme représenté à la fig. 2, pour former des ensembles 6 constitués de deux ou trois (ou plus) préformes emboîtées. Cet emboîtement peut survenir notamment lorsque les préformes sont stockées en vrac dans une trémie 7 servant à alimenter une machine 8 de fabrication de récipients (voir fig. 3). Les préformes sont extraites de la trémie 7 jusqu'à un appareil démêleur 9 qui les amène une par une en position verticale tête en haut sur une voie de cheminement 10 à glissières inclinées 11 sur lesquelles les préformes avancent par gravité pour être présentées à l'entrée 12 de la machine 8.

La fig. 2 montre les deux positions que peuvent prendre des ensembles 6 de préformes emboîtées amenés sur les glissières 11 :
- l'ensemble 6₁ est en position couchée sur les glissières et avance dans cette position sur celles-ci,
- l'ensemble 6₂ est en position verticale : la préforme inférieure repose par sa tête sur les glissières de façon identique aux préformes isolées, tandis que l'autre préforme qui est emboîtée dans la première la domine et surplombe toute la rangée de préformes isolées.

Pour l'élimination des préformes emboîtées avant qu'elles ne parviennent à l'entrée 12 de la machine 8 de fabrication des récipients, on intercale dans le dispositif de convoyage à glissières une unité 13 d'élimination des préformes emboîtées.

Cette unité 13 comporte tout d'abord des moyens de déséquilibrage 14 qui sont aptes à déporter le centre de gravité des préformes et qui mette à profit la différence de position du centre de gravité des préformes isolées et des préformes emboîtées pour maintenir les premières sur les glissières et provoquer le basculement des seules préformes emboîtées hors des glissières.

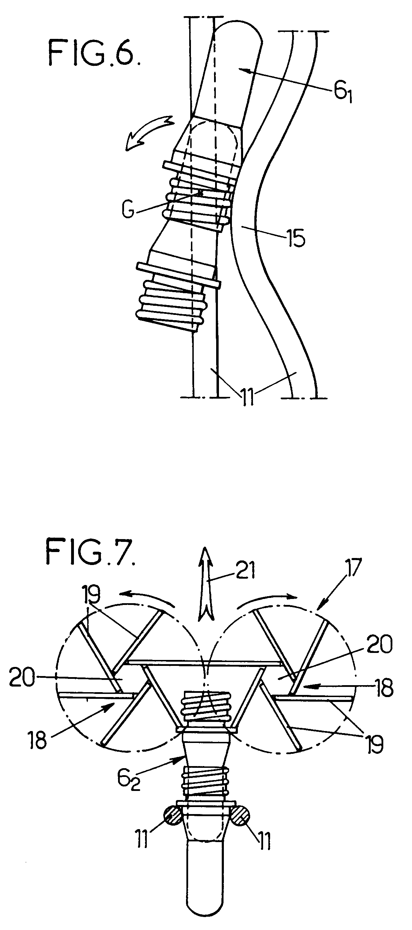

Une réalisation simple de tels moyens de déséquilibrage consiste à rompre localement, c'est-à-dire sur un tronçon de faible longueur, le parallélisme des deux glissières 11 et à les agencer mutuellement de manière à ce qu'elles présentent une inclinaison transversale α d'au moins environ 60° par rapport à l'horizontale (voir fig. 4 à 6). On notera du reste qu'il suffit que l'une des deux glissières 11 (celle représentée sur la droite sur les fig. 4 à 6, par exemple) présente une déformation 15 tandis que l'autre (celle située à gauche) peut conserver une forme longitudinale normale (par exemple rectiligne comme représenté).

Dans l'exemple plus particulièrement visible à la fig. 4, l'angle d'inclinaison α de la perpendiculaire P commune aux deux glissières 11, par rapport à l'horizontale, est de l'ordre de 62°, mais la valeur de cette inclinaison doit bien entendu être adaptée à chaque cas spécifique en fonction de la position du centre de gravité de deux préformes emboîtées.

Sur les figures 4 et 5, on a représenté, respectivement en vue en bout et en vue de dessus, un ensemble 6₂ de deux préformes emboîtées qui se présente dans le dispositif en position verticale. par Gᵢ on a figuré la position du centre de gravité d'une préforme isolée : compte tenu de la position de ce centre de gravité par rapport aux deux glissières 11, les préformes isolées inclinées restent en position entre les glissières. On a représenté en G le centre de gravité des deux préformes emboîtées : une verticale par ce centre de gravité passe en dehors des glissières 11 et l'ensemble 6₂ des deux préformes bascule hors des glissières (vers la gauche sur les figures 4 et 5) et tombe dans une trémie de recueil 16.

Sur la figure 6, on a représenté en vue de dessus un ensemble 6₁ de deux préformes emboîtées qui se présente dans le dispositif en position couchée sur les glissières. Compte tenu de la position de leur centre de gravité Gᵢ situé sous la collerette 4 par laquelle elles reposent sur les glissières, les préformes isolées ne peuvent pas occuper de façon stable une position couchée sur les glissières et ne peuvent que se présenter verticalement entre les deux glissières. par contre un ensemble 6₁ de deux ou plus de deux préformes peut se présenter dans une position couchée en reposant par les collerettes 4 sur les glissières 11 ; au passage de la déformation 15, le centre de gravité G de l'ensemble de préformes emboîtées est déporté et la verticale du point G passe au-delà de la glissière de gauche (sur la fig. 6) : l'ensemble 6₁ de préformes emboîtées tombe dans la trémie 16.

L'efficacité du dispositif de déséquilibrage qui vient d'être décrit est totale pour l'éjection des ensembles 6₁ de préformes emboîtées présentés en position couchée (fig. 6). par contre, dans-le cas d'ensembles 6₂ de préformes emboîtées présentés en position verticale (fig. 4 et 5), des frottements entre préformes successives accolées et surtout un chevauchement possible des collerettes de ces préformes peuvent empêcher le basculement d'un ensemble de préformes emboîtées au passage du dispositif 14.

Il est donc nécessaire de le compléter par un dispositif d'extraction 17 qui agit uniquement sur les ensembles verticaux 6₂ de préformes emboîtées pour les extraire verticalement hors des glissières et les faire retomber dans la trémie 16. pour les raisons indiquées plus haut, il est nécessaire que le dispositif d'extraction 17 soit situé en aval du dispositif de déséquilibrage 14 pour obtenir une efficacité totale dans l'élimination des ensembles de préformes emboîtées.

Comme représenté à la fig. 7, le dispositif d'extraction 17 comprend essentiellement deux roues à ailettes 18 qui tournent en sens inverses l'une de l'autre (contrarotatives) en étant situées, transversalement aux glissières 11, au-dessus du niveau des têtes de préformes isolées, mais en dessous du niveau de la tête supérieure d'un ensemble 6₂ de deux préformes. Les ailettes 19 sont fixées sur un arbre 20. Les trajectoires circulaires des extrémités des ailettes des deux roues sont approximativement tangentes ou peu écartées l'une de l'autre. En outre, les ailettes sont réalisées de manière à être élastiquement déformables. L'extraction de l'ensemble de préformes emboîtées est schématisé par la flèche 21 (fig. 7).

Le montage et l'entraînement des roues contrarotatives 18 peuvent être aisément adaptés par l'homme de l'art à chaque cas d'application. par exemple, comme représenté à la fig. 3, les deux roues 18 sont fixées, dans la position susindiquée, à l'extrémité inférieure de deux bras de support 22 solidaires d'un bâti 23, supportant un motovariateur d'entraînement électrique 24, qui est fixé à la trémie 16.

Sur le motovariateur 24 une double sortie de mouvement est réalisée par un train de deux engrenages en prise directe et le mouvement est transmis aux arbres 20 par deux courroies.

Comme on peut le voir à la fig. 3, les moyens mis en oeuvre conformément à l'invention pour une élimination totale des préformes emboîtées peuvent trouver place dans le dispositif de convoyage à glissières qui alimente la machine de fabrication. La mise en place de ces moyens ne nécessite aucun accroissement sensible de la longueur de ces glissières ; lesdits moyens sont parfaitement appropriés pour équiper des glissières rectilignes descendantes, comme représenté, sur lesquelles les préformes cheminent par gravité, mais ils peuvent éventuellement être mis en place, si nécessaire, dans toutes autres configurations (par exemple glissières horizontales et/ou en courbe). La mise en oeuvre de ces dispositifs ne nécessite donc pas un remaniement important des plans prévus pour la construction d'installations neuves, et en outre des installations déjà existantes peuvent aussi bien en être équipées sans problème. Enfin, le coût de ces dispositifs reste minime en regard des pertes de production qu'ils évitent.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes comprises dans la portée des revendications.

## Revendications

1. Dispositif de convoyage de préformes (1) destinées à la fabrication de corps creux en matière synthétique, tels que bouteilles ou analogues, comportant une voie de cheminement (10) comprenant deux glissières (11) sensiblement parallèles et disposées de manière telle qu'une perpendiculaire (P) commune aux deux glissières soit sensiblement horizontale, lesdites préformes présentant une tête (2) élargie par rapport à au moins une partie de leur corps (5) et étant engagées verticalement entre les deux glissières sur lesquelles elles se déplacent en étant soutenues par leur tête, caractérisé en ce qu'il comporte des moyens (13) d'élimination de préformes emboîtées les unes dans les autres (6₁, 6₂) de façon indésirable, lesquels moyens d'élimination (13) comprennent des moyens de déséquilibrage (14) aptes à déporter le centre de gravité des préformes de manière telle qu'une verticale passant par le centre de gravité (G) d'un ensemble (6₁, 6₂) de préformes emboîtées les unes dans les autres passe à l'extérieur de l'une des glissières (11) et que cet ensemble de préformes emboîtées soit déséquilibré et tombe des glissières.

2. Dispositif de convoyage selon la revendication 1, caractérisé en ce que les moyens de déséquilibrage (14) des moyens d'élimination des préformes emboîtées comprennent un tronçon de voie de cheminement dans laquelle des deux susdites glissières sont mutuellement décalées et la susdite perpendiculaire commune (P) est inclinée sur l'horizontale d'une valeur (α) telle que les ensembles de préformes emboîtées soient déséquilibrés.

3. Dispositif de convoyage selon la revendication 2, caractérisé en ce que l'une des glissières est parallèle à l'axe de la voie de cheminement tandis que l'autre glissière présente un tronçon (15) qui est situé à une hauteur supérieure à celle du tronçon en regard de la première glissière et qui se raccorde de façon progressive aux tronçons situés à son amont et à son aval.

4. Dispositif de convoyage selon l'une quelconque des revendications 1 à 3, caractérisé en ce que les moyens de déséquilibrage sont agencés pour que la perpendiculaire commune aux deux glissières soit inclinée d'au moins environ 60° par rapport à l'horizontale.

5. Dispositif de convoyage selon l'une quelconque des revendications 1 à 4, caractérisé en ce que les moyens (13) d'élimination des préformes emboîtées comprennent en outre des moyens d'extraction (17) situés longitudinalement à l'écart des susdits moyens de déséquilibrage et au-dessus de la voie de cheminement (10), à une hauteur supérieure à celle des préformes isolées circulant sur les glissières, mais inférieure à celle de deux préformes emboîtées circulant en position verticale sur les glissières, lesdits moyens d'extraction étant agencés pour saisir et extraire verticalement hors de la voie de cheminement des préformes emboîtées.

6. Dispositif de convoyage selon la revendication 5, caractérisé en ce que les moyens d'extraction (17) comprennent deux roues contrarotatives (18) munies de palettes (19) élastiquement déformables et mutuellement disposées de manière qu'un ensemble de préformes emboîtées disposées verticalement soit saisi entre les palettes des deux roues contrarotatives et évacué vers le haut (21).

7. Dispositif de convoyage selon la revendication 5 ou 6, caractérisé en ce que les moyens de déséquilibrage (14) sont situés en amont des moyens d'extraction (17) dans le sens de défilement des préformes.

8. Dispositif de convoyage selon la revendication 5 ou 6, caractérisé en ce que les moyens de déséquilibrage (14) sont situés en aval, dans le sens de défilement des préformes, des moyens d'extraction (17).

9. Dispositif de convoyage selon l'une quelconque des revendication 1 à 7, caractérisé en ce que la voie de cheminement (10) est inclinée et en ce que les préformes circulent dans le sens descendant.

10. Dispositif de convoyage selon l'une quelconque des revendications 1 à 8, caractérisé en ce que les moyens d'élimination (13) des préformes sont situés dans une partie rectiligne de la voie de cheminement (10).

## Claims

1. A conveyor device for transporting preforms (1) intended for the manufacture of hollow bodies made of synthetic material, such as bottles or the likes, including a conveyor track (10) incorporating two, substantially parallel slide-rails (11) arranged such that a perpendicular line (P) common to both slide-rails is substantially horizontal, said preforms each having a head (2) larger than at least one portion of a body (5) thereof and being engaged vertically between the slide-rails during transport while being supported by their heads, characterized by comprising means (13) for removing preforms (6₁, 6₂) undesirably interlocked into each other, said removal means (13) comprising unbalancing means (14) arranged for shifting a center of gravity of the preforms such that a vertical line passing through the center of gravity of a group (6₁, 6₂) of interlocked preforms lies outside of one of said slide-rails (11) and that said group of interlocked preforms becomes unbalanced and fall off the slide rails.

2. A conveyor device according to claim 1, characterized by that the unbalancing means (14) of said means for removing interlocked preforms comprises a conveyor track section in which said both slide-rails are mutually offset, and said common perpendicular line (P) is inclined in relation to the horizontal by an angular value (α) such that groups of interlocked preforms become unbalanced.

3. A conveyor device according to claim 2, characterized by that a first one of the slide-rails is parallel to an axis of the conveyor track, while the other one of the slide-rails has a section (15) located a height greater than that of the first slide-rail and which progressively joins to sections upstream and dowstream therefrom.

4. A conveyor device according to anyone of claims 1 to 3, characterized in that said unbalancing means are arranged so that the perpendicular line common to said both slide-rails is inclined by at least about 60° in relation to the horizontal.

5. A conveyor device according to anyone of claims 1 to 4, characterized in that the means (13) for removing interlocked preforms further comprises extraction means (17) disposed longitudinally spaced from said unbalancing means and above the conveyor track (10), at a height greater that that of single preforms travelling on the slide-rails, and lower than that of two interloked preforms travelling in a vertical position on the slide-rails, said extraction means being arranged to grasp and carry interlocked preforms vertically off the conveyor track.

6. A conveyor device according to claims 5, characterized in that the extraction means (17) comprises two counter-rotating wheels (18) provided with elastically deformable blades (19) and arranged in combination so that a group of vertically-positioned interlocked preforms is grasped between the blades of said two counter-rotating wheels and carried upwardly (21).

7. A conveyor device according to claim 5 or 6, characterized in that the unbalancing means (14) are located upstream from the extraction means (17), considered in the direction of travel of the preforms.

8. A conveyor device according to claim 5 or 6, characterized in that the unbalancing means (14) are located downstream from the extraction means (17), considered in the direction of travel of the preforms.

9. A conveyor device according to anyone of claims 1 to 7, characterized in that the conveyor track (10) is inclined and that the preforms travel downwardly.

10. A conveyor device according to anyone of claims 1 to 8, characterized in that the means (13) for removing interlocked preforms are located in a rectilinear part of the conveyor track (10).

## Patentansprüche

1. Fördereinrichtung für Vorformlinge (1), die bestimmt sind für die Herstellung von Hohlkörpern aus synthetischem Material, beispielsweise Flaschen oder ähnliches, die aufweist einen Förderweg (10) mit zwei Gleitschienen (11), die im wesentlichen parallel und so angeordnet sind, daß eine senkrechte (P), die den beiden Gleitschienen gemeinsam ist, im wesentlichen horizontal ist, wobei die Vorformlinge einen Kopf (2) aufweisen, der im Verhältnis zu mindestens einem Teil ihres Körpers (5) vergrößert ist, und vertikal zwischen den beiden Gleitschienen aufgenommen sind, auf denen sie sich verlagern, wobei sie durch ihren Kopf unterstützt werden, dadurch gekennzeichnet, daß sie Mittel (13) zur Entfernung von in unerwünschter Weise ineinander verschachtelten Vorformlingen (6₁, 6₂) aufweist, wobei die Mittel zur Entfernung (13) Mittel zur Gleichgewichtsstörung (14) aufweisen, die geeignet sind, den Schwerpunkt der Vorformlinge so zu verlagern, daß eine Vertikale, die durch den Schwerpunkt (G) einer Einheit (6₁, 6₂) von ineinander verschachtelten Vorformlingen verläuft, außerhalb einer der Gleitschienen (11) verläuft, und daß die Einheit von verschachtelten Vorformlingen aus dem Gleichgewicht gebracht wird und von den Gleitschienen fällt.

2. Fördereinrichtung nach Anspruch 1, dadurch gekennzeichnet, daß die Mittel zur Gleichewichtsstörung (14) der Mittel zur Entfernung der verschachtelten Vorformlinge ein Stück eines Förderweges aufweisen, in dem die beiden oben genannten Gleitschienen gegeneinander versetzt sind und die oben genannte gemeinsame Senkrechte (P) gegen die Horizontale um einen Wert (α) geneigt ist, so daß die Einheit der verschachtelten Vorformlinge aus dem Gleichgewicht gebracht wird.

3. Fördereinrichtung nach Anspruch 2, dadurch gekennzeichnet, daß einer der Gleitschienen parallel zur Achse des Förderweges ist, während die andere Gleitschiene ein Stück (15) aufweist, das in einer Höhe oberhalb derjenigen des Stücks im Hinblick auf die erste Gleitschiene gelegen ist und das sich in einer progressiven Art an die stromauf und stromab gelegenen Stücke annähert.

4. Fördereinrichtung nach einem der Ansprüche 1 bis 3, dadurch gekennzeichnet, daß die Mittel zur Gleichgewichtsstörung so eingerichtet sind, daß die den beiden Gleitschienen gemeinsame Senkrechte um mindestens 60° in Bezug zur Horizontalen geneigt ist.

5. Fördereinrichtung nach einem der Ansprüche 1 bis 4, dadurch gekennzeichnet, daß die Mittel (13) zum Entfernen der verschachtelten Vorformlinge darüber hinaus Extraktionsmittel (17) aufweisen, die in Längsrichtung mit Abstand zu den oben genannten Mitteln zur Gleichgewichtsstörung und oberhalb des Förderweges (10) angeordnet sind in einer Höhe oberhalb derjenigen der einzelnen Vorformlinge, die auf den Gleitschienen zirkulieren, aber unterhalb von der von zwei verschachtelten Vorformlingen, die in vertikaler Position auf den Gleitschienen zirkulieren, wobei die genannten Extraktionsmittel eingerichtet sind, um die verschachtelten Vorformlinge zu packen und vertikal aus dem Förderweg herauszuziehen.

6. Fördereinrichtung nach Anspruch 5, dadurch gekennzeichnet, daß die Extraktionsmittel (17) zwei gegenläufige Räder (18) aufweisen, die mit elastisch verformbaren und gegenseitig so angeordneten Radschaufeln angeordnet sind, daß eine Einheit von verschachtelten Vorformlingen, die vertikal angeordnet ist, zwischen den Radschaufeln der beiden gegenläufigen Räder gepackt und nach oben (21) herausgezogen wird.

7. Fördereinrichtung nach Anspruch 5 oder 6, dadurch gekennzeichnet, daß die Mittel zur Gleichgewichtsstörung (14) stromaufwärts der Extraktionsmittel (17) im Sinn des Vorbeilaufens der Vorformlinge angeordnet sind.

8. Fördereinrichtung nach Anspruch 5 oder 6, dadurch gekennzeichnet, daß die Mittel zur Gleichgewichtsstörung stromabwärts im Sinn des Vorbeilaufens der Vorformlinge zu den Extraktionsmitteln (17) gelegen sind.

9. Fördereinrichtung nach einem der Ansprüche 1 bis 7, dadurch gekennzeichnet, daß der Förderweg (10) geneigt ist und dadurch, daß die Vorformlinge im abfallenden Sinn umlaufen.

10. Fördereinrichtung nach einem der Ansprüche 1 bis 8, dadurch gekennzeichnet, daß die Mittel (13) zum Entfernen der Vorformlinge in einem geradlinigen Teil des Förderweges (10) gelegen sind.
